# EUROPEAN PATENT APPLICATION

(11) **EP 3 153 975 A1**
(43) Date of publication of application: **12.04.2017**
(21) Application number: 15188444.2
(22) Date of filing: 06.10.2015
(51) Int. Cl.: G06F 17/30

(54) **A SYSTEM AND METHOD FOR MANAGING, PUBLISHING AND USING HISTORICAL, ARTISTIC, CULTURAL AND TOURISTIC INFORMATION AND MULTIMEDIA CONTENT**

(71) Applicant: widesolutions.it srl, 20134 Milano (MI) (IT)
(72) Inventor: Palladino, Costantino, 29122 Piacenza (IT)

(57) **Abstract**

The invention relates to a system based on information technology and telecommunications, and a methodology for managing, publishing and using of historical, artistic, cultural and touristic information and multimedia content (text, images, audio and video).

The system in relation to its method allows people, companies and / or communities of them ("the content provider") to record / store, transmit (in real-time fashion) and, even in case of no telecommunication signal/connection, the fruition of artistic, historical, cultural and touristic data and information to other people, companies and/or communities of them ("the users") to improve their cultural background.

The system has a content management system (CMS) used by the content provider which allows to organize and store historical, cultural, artistic and touristic data in a special database, while the Publisher involved in the publication of contents allows to aggregate, encrypt and transmit data from the database to the component involved in the presentation of multimedia content.

The component involved for the presentation of multimedia content is a software application for mobile devices able to process, receive, store and display data which is used by a person while visiting a monument, a cultural, historical and artistic physical or virtual place.

This system has also:
• an authentication/authorization software component to grants user and providers' appointees to get and display cultural data and information.
• an analysis tool to analyze the application user usage behavior.

## Description

### 1.1 State of Art

### 1.1.1 Audio-guide systems

The organizations involved in the conservation of a cultural heritage put at people's disposal legacy audio guide systems able to illustrate cultural sites. These systems consist of:
- a series of fixed and/or mobile devices with or without headphones, equipped with rechargeable batteries which contain pre-recorded audio tracks related to the "cultural heritage";
- a station with a number of places equipped with mobile devices aimed at recharging the battery;
- a station consisting of hardware and software for the management of audio portable devices.

### 1.1.2 Mobile Apps

Applications for smartphone devices (ref. 2.a) and tablet (ref. 2.b) provide data and information on a single cultural and specific cultural site are available for sale in market. Tourists can buy specific and updated applications of a cultural site.

### 1.1.3 Internet

Tourists use internet to gather information of a cultural site in advance and use this content while visiting the site.

### 1.2 The problem statement

For these problems there are the following actors:
- **The content provider:** people, organizations and / or communities that have historical, cultural, artistic data or/and information.
- **The user:** people, organizations and / or communities that have mobile devices able to process, receive, store and display data.

The content provider is interested in using a system and method able to store, update and transmit cultural data and information without geographical (location of the cultural site) and temporal constraints (real time).

While visiting a cultural or artistic place (museums, art galleries, castles, churches, squares, archaeological sites, etc hereinafter called "cultural site), users are interested in improving their cultural background through the access to cultural data and information without temporal and geographical constraints, and in this case:
- with or without electronic connection in that place at the time of the visit.
- using the same system for more cultural sites in places even far from each other.
- accessing with electronic connection to the most updated cultural version.

### 1.3 Solution of the problem statement

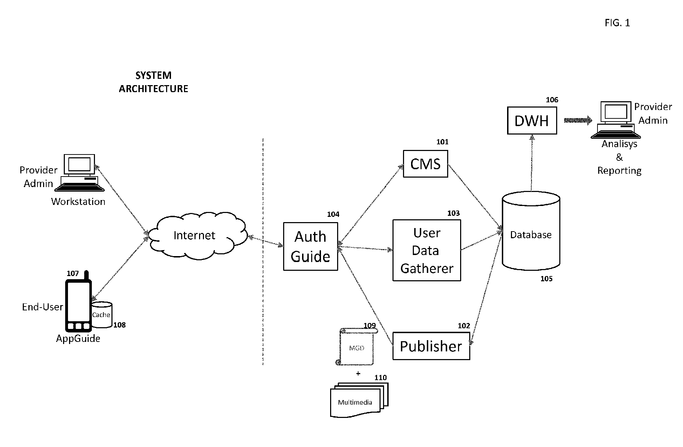

The picture 1 shows the system's components used to solve the technical problem. It consists of:
- a component for the management of cultural data and information (CMS) (FIG. 1 - ref. 101).
- a storage database and a structured data database (FIG. 1 - ref. 105).
- a component for the publication of cultural information and data (Publisher) (FIG. 1 - ref. 102).
- an application for the presentation of multimedia content (AppGuide) (FIG. 1 - ref. 107).
- The component for user Login (AuthGuide) (FIG. 1 - ref. 104).
- The component for data collection and analysis of the system (Data Warehouse, ref. 2.c) (FIG. 1 - ref. 103 & Ref. 106).

### 1.3.1 Content Management System (CMS)

Content management system" or simply CMS (FIG. 1 - ref. 101) manages cultural data and information.

Its main function is to gather, manage and display cultural data and information in a structured way and it is used by the content provider's "appointees" for the following actions and functions:
- Entering and updating cultural data and information;
- Request of publication/suspension (to the Publisher) of a multimedia guide.

CMS is a web application (ref. 2.d) available to "appointees", people designated by suppliers, on Internet through a browser.

### 1.3.2 The data modeling

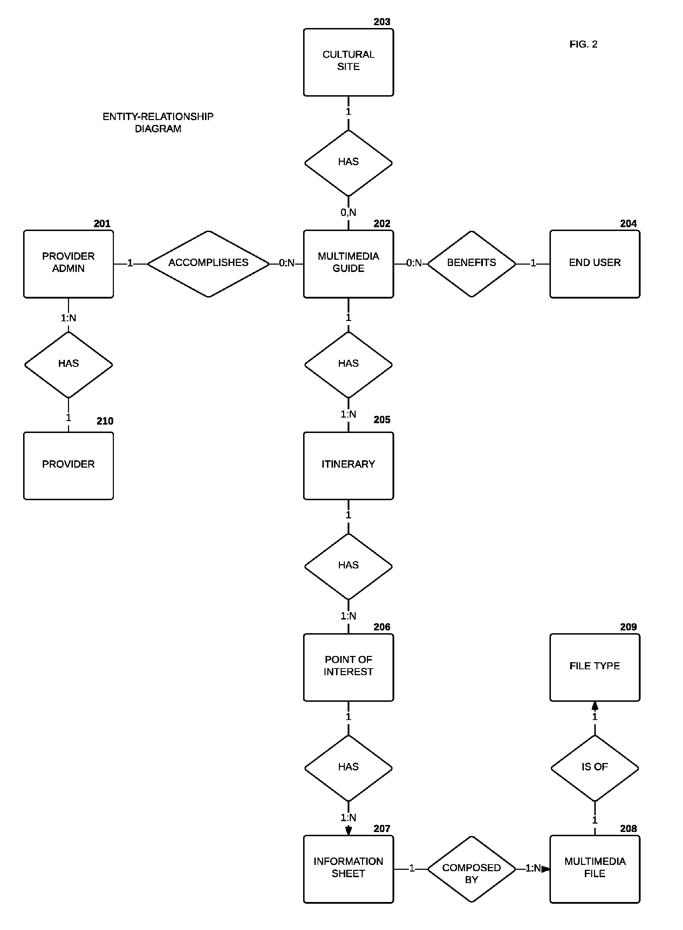

All the system and method of the current invention defines and uses the following logical entities for the cultural data organization (FIG. 2):
- **Content Provider:** people, organizations and / or communities in possession of historical, artistic and cultural data and information (FIG. 2 - Ref. 210);
- **Appointee:** a person authorized by the provider to accede to the CMS and manage cultural data and information (FIG. 2 - Ref. 201);
- **Users:** people interesting in using the multimedia guide (FIG. 2 - Ref. 204);
- **Cultural Site:** physical or virtual place where a content provider wants to send cultural information to users (FIG. 2 - Ref. 203);
- **Multimedia guides:** collecting cultural data and information concerning a specific cultural heritage site (FIG. 2 - Ref. 202);
- **Itineraries:** users can go through physical or virtual paths thanks to a multimedia guide (FIG. 2 - Ref. 205);
- **Stages or more generally "Points of Interest":** physical or virtual point within a itinerary which forwards specific cultural data and information for one or more artistic artefacts and / or more generally physical or virtual objects in the cultural site (FIG. 2 - Ref. 26);
- **Multimedia content:** collections of text files, images, audio and video containing cultural data and information (FIG. 2 - Ref. 208);
- **Information sheets:** collections of one or more text files, one or more images, one or more audio file or video files (multimedia content) that provide cultural data and information about one or more artistic/cultural artefacts or more generally physical or virtual objects of the cultural site (FIG. 2 - Ref. 207).

All the system and method of the current invention defines the following relations of the logical entities defined before:
- An appointee may be charged to manage cultural data and information by different providers;
- A content provider can produce more multimedia guides for the same cultural site or a multimedia guide for different cultural sites;
- Different multimedia guides can be related to the same cultural site;
- A multimedia guide can contain one or more initeraries;
- A itinerary can contain one or more stages/points of interest;
- A stage/point of interest can contain one or more information sheets;
- An information sheet contains at least one of the following media elements: text, images, audio (most of them), video (most of them) or any combination of them.
- A user can use more multimedia guides, for a same cultural site or more of them. Structured data are stored within a database.

### 1.3.3 The Publisher

It is an automatic system which manages the publication of cultural data and information and has the following functions (FIG. 1 - Ref. 102):
- Creation of the metadata descriptor: Multimedia Guide Descriptor (hereafter MGD) (FIG. 1 - ref. 109);
- Encryption and transmission of MGD descriptor metadata (FIG. 1 - Ref. 109) and media content files to presentation applications of cultural data and information on user mobile devices (FIG. 1 - ref. 110).

The Publisher is a web application exposed on the Internet network (ref. 2.e) that receives:
- requests for the MGD creation from the CMS;
- requests of MGD transmission from the presentation software of cultural data and/or information through protocol commands HTTP / HTTPS (ref. 2.f).

### 1.3.3.1 Multimedia Guide Descriptor (MGD)

MGD file is a file (such as XML (ref. 2.g) or JSON (ref. 2.h)) that contains all the multimedia guide data structured as explained before. In particular, it contains (FIG. 1 - ref. 109):
- data and information regarding the multimedia guide;
- data and information regarding the content provider;
- data and information regarding the cultural site;
- list and details of itineraries belonging to the multimedia guide;
- list and details of stages/points of interest for all itineraries of the multimedia guide.
- list and data sheets with the external references to the multimedia content files (images, audio, video). The text of the media content is already contained in the same MGD.

MGD file respects the relations of the entities as described in paragraph 1.3.2.

Before being transmitted it is encrypted through a symmetric encryption algorithm.

### 1.3.4 The authentication and the authorization component (AuthGuide)

User login and authorization component allows the following operations (FIG. 1 - ref. 104):
- User and/or appointee Registration;
- User and/or appointee Authentication;
- User authorization to accede to a multimedia guide content;
- Content provider authorization to CMS access;

This component is a web application (ref. 2.d) exposed on the Internet the AppGuide (FIG. 1 - ref. 107) through HTTP / HTTPS (ref. 2.f) or the appointees through a browser (ref. 2.i).

### 1.3.5 The AppGuide

It is a software application on user mobile device for the presentation of cultural data and information. (FIG. 1 - ref. 107) and interacts with the Publisher to receive the MGD and all multimedia content in the presentation of all multimedia guide content and data.

### 1.3.5.1 AppGuide Cache

AppGuide uses non-volatile memory of the mobile device to store MGD files and all the associated multimedia files. The non-volatile memory area is called AppGuide Cache (FIG. 1 - ref. 108) which stores these data and this information.

The users can use the content of one or more media guides without telecommunication connection as long as the MGD file and all multimedia files related to those multimedia guides have been previously saved in the AppGuide Cache.

### 1.3.6 Data Warehouse

The Data Warehouse component collects data transmitted directly form the AppGuide in order to analyze the functioning and use of the same AppGuide.

### 1.4 Description of one or more forms of implementation.

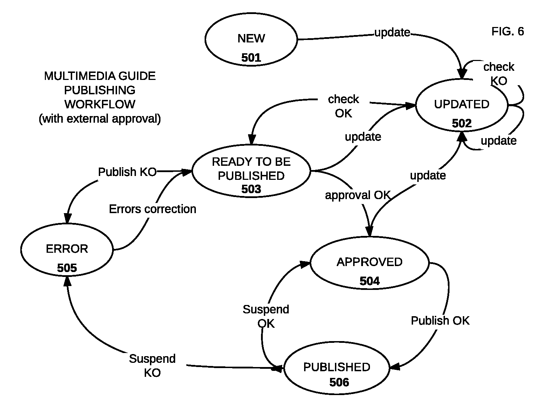

Other people, organizations and / communities can form another actor (hereafter the "controller"). In defense of users, he is in charge of checking data and information published by one or more content providers and allows alone or with other controllers the publication of a multimedia guide (FIG. 6).

### 1.5 How it works

### 1.5.1 Mode of operation for the "Content Providers"

The picture 3 illustrates the mode of operation for content providers.

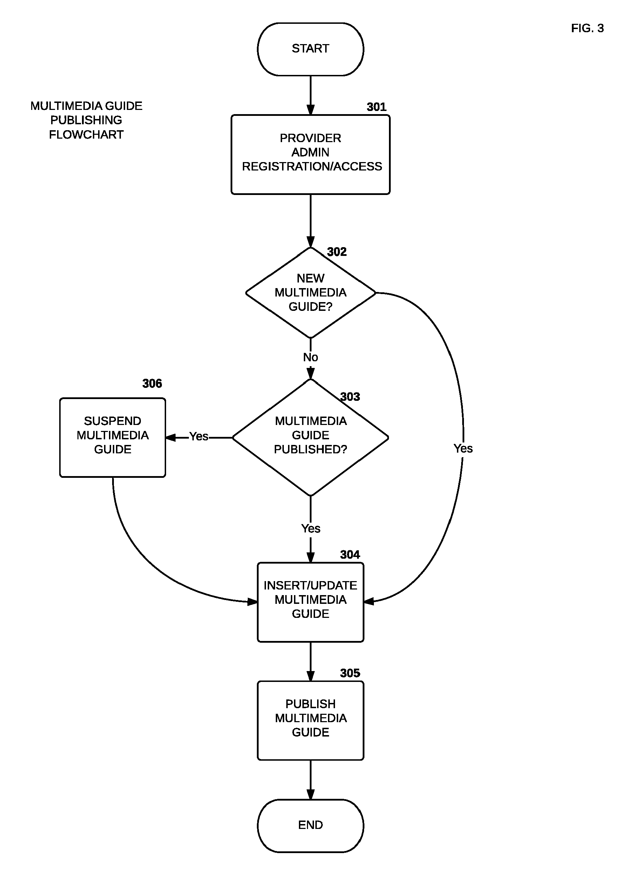

First of all, a content provider's appointee has to carry out the registration operation by giving to the AuthGuide component his personal data and those of the content provider before entering and updating cultural data and information. (FIG. 3 - Ref. 301).

After the registering process, the appointee logs on to CMS and enters and / or updates the cultural data or information of one or more multimedia guides relating to one or more cultural sites (FIG. 3 - Ref. 304).

After the data entry and the updating operation, the appointee publishes one or more multimedia guides (FIG. 3 - Ref. 305). For the publication of the multimedia guide, the Publisher requires a MGD file generation of the multimedia guides.

In order to subsequently update published multimedia data, it is necessary:
- to suspend the multimedia guide before (FIG. 3 - Ref. 306)
- to update multimedia data (FIG. 3 - Ref. 304)
- to republish the multimedia guide again (FIG. 3 - Ref. 305)

### 1.5.2 Mode of operation for "Users"

The picture 4 illustrates the mode of operation for Users.

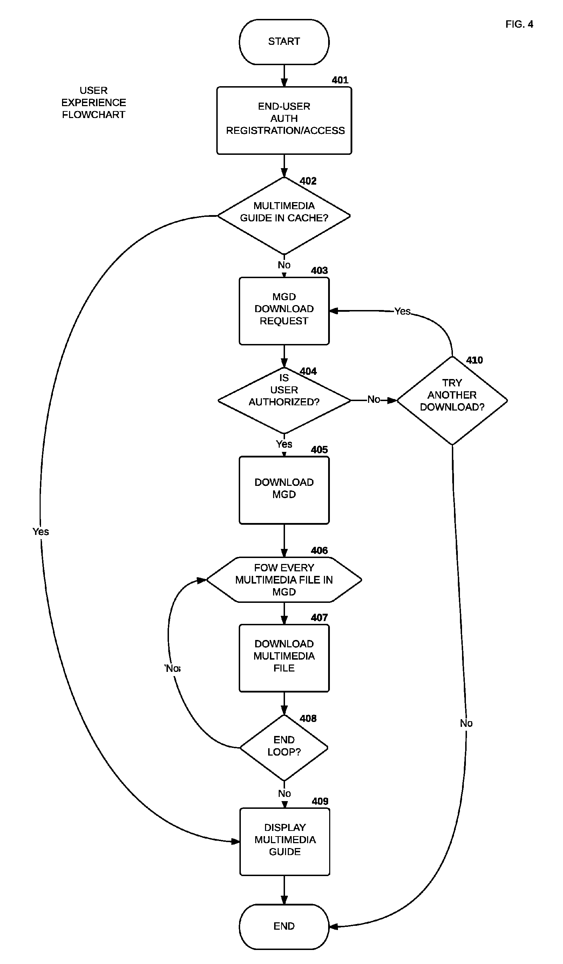

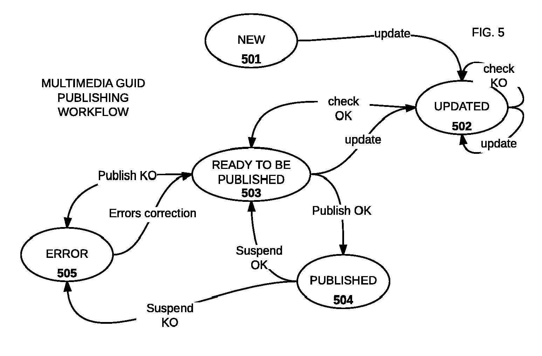

Before acceding to data or information of one or more multimedia guides, users must register to the system and enter their personal data (FIG. 4 - Ref. 401).

The registration to AuthGuide can be achieved through a browser or the AppGuide which forwards the request to the AuthGuide component.

After the registration process, the App Guide provides the following functions:
- List and Search all the available media guides;
- Get and Display multimedia content, and in particular:
   o Get and Display general data of a multimedia guide, a itinerary or a stage/point of interest;
   o List all the multimedia guide itineraries;
   o List all the stages/points of interest of a multimedia guide initerary;
   o Display detail data of all information sheets belonging to a stage/point of interest;
   o Display texts and images of all the data sheets belonging to a stage/point of interest;
   o Play audio or video of an information sheet

When a user accedes to a multi-media guide content, AppGuide openly carries out the following operations:
- It sends the MGD downloading request of a specific multimedia guide to the Publisher (FIG. 4 - Ref. 403);
- It sends the MGD downloading request of a specific multimedia guide to the Publisher (FIG. 4 - Ref. 403);
- AppGuide sores the encrypted MGD file contents in its MGD cache (FIG. 4 - Ref. 405)
- AppGuide decrypts and reads the information contained in the MGD file and then asks the publisher to send all the multimedia files related to that multimedia guide (FIG. 4 - Ref. 406 & Ref. 407 & Ref. 408);
- The Publisher sends multimedia encrypted files to the App (Fig. 4 - Ref. 406 & Ref. 407 & Ref. 408)
- AppGuide stores all the encrypted multimedia files related to that multimedia guide in its cache;
- AppGuide decrypts and shows to the user the multimedia guide content (FIG. 4 - Ref. 409).

After having storing the MGD file and all the multimedia files related to the same MGD in the AppGuide cache, the multimedia guide can be used even without electronic connection.

### 1.6 Description of the drawings

Picture 1 - SYSTEM ARCHITECTURE: illustrates the system architecture.
Picture 2 - ENTITY-RELATIONSHIP DIAGRAM: illustrates the entity-relation model of the cultural, artistic and historic data structuring.
Picture 3 - MULTIMEDIA GUIDE PUBLISHING FLOWCHART: illustrates the mode of operation for content providers.
Picture 4 : USER EXPERIENCE FLOWCHART: illustrates the mode of operation for users.
Picture 5 - MULTIMEDIA GUIDE PUBLISHING WORKFLOW: shows the state diagram for the publishing operations of a multi-media (without external approval).
Picture 6 - MULTIMEDIA GUIDE PUBLISHING WORKFLOW: shows the state diagram for the publishing operations of a multimedia guide (with external approval).

### 1.7 Benefits

- Users use a single application for the use of data and cultural information.
- Users can use cultural data and information contained in a multimedia guide even without telecommunication connection as long as these data and this information are in the application cache involved the presentation of these data and this information (AppGuide).
- Users, with electronic connection, can use real-time cultural data and information updated by content providers.
- Content providers and users have no geographical constraints in relation to a cultural heritage site: it is possible to publish and use cultural data and information for all the cultural heritage sites in the world.
- Managing institutions of cultural sites no longer need to have a traditional self-guided system to transmit data and cultural information to tourists.

### 2 References

a. A **smartphone** or **smart phone** is a mobile phone with an advanced mobile operating system which combines features of a personal computer operating system with other features useful for mobile or handheld use. They typically combine the features of a cell phone with those of other popular mobile devices, such as personal digital assistant (PDA), media player and GPS navigation unit. Most smartphones can access the Internet, have a touchscreen user interface, can run third-party apps, music players and are camera phones. Most Smartphones produced from 2012 onwards also have highspeed mobile broadband 4G LTE internet, motion sensors, and mobile payment mechanisms.
b. A **tablet** computer, commonly shortened to tablet, is a mobile computer with a touchscreen display, circuitry and battery in a single device. Tablets come equipped with sensors, including cameras, a microphone and an accelerometer, and the touchscreen display uses finger or stylus gestures substituting for the use of computer mouse and keyboard. They usually feature on-screen, pop-up virtual keyboards for typing. Tablets may include physical buttons for basic features such as speaker volume and power, and ports for network communications and battery charging. Tablets are typically larger than smartphones or personal digital assistants at 7 inches (18 cm) or larger, measured diagonally. Tablets can be classified into several categories according to the presence and physical appearance of keyboards. Slates and booklets do not have a physical keyboard and typically feature text input performed through the use of a virtual keyboard projected on a touchscreen-enabled display. Hybrids and convertibles do have physical keyboards, although these devices typically also make virtual keyboards available.
c. In computing, a **data warehouse** (DW or DWH), also known as an enterprise data warehouse (EDW), is a system used for reporting and data analysis. DWs are central repositories of integrated data from one or more disparate sources. They store current and historical data and are used for creating analytical reports for knowledge workers throughout the enterprise. Examples of reports could range from annual and quarterly comparisons and trends to detailed daily sales analyses.
d. In computing, a **web application** or web app is a client-server software application in which the client (or user interface) runs in a web browser.
e. The **Internet** is the global system of interconnected computer networks that use the Internet protocol suite (TCP/IP) to link billions of devices worldwide. It is a network of networks that consists of millions of private, public, academic, business, and government networks of local to global scope, linked by a broad array of electronic, wireless, and optical networking technologies. The Internet carries an extensive range of information resources and services, such as mobile apps including social media apps, the inter-linked hypertext documents and applications of the World Wide Web (WWW), electronic mail, multiplayer online games, telephony, and peer-to-peer networks for file sharing.
f. The **Hypertext Transfer Protocol** (HTTP) is an application protocol for distributed, collaborative, hypermedia information systems. HTTP is the foundation of data communication for the World Wide Web.
g. **Extensible Markup Language** (XML) is a markup language that defines a set of rules for encoding documents in a format which is both human-readable and machine-readable. It is defined by the W3C's XML 1.0 Specification and by several other related specifications, all of which are free open standards.
h. **JSON,** is an open standard format that uses human-readable text to transmit data objects consisting of attribute-value pairs. It is the primary data format used for asynchronous browser/server communication (AJAJ), largely replacing XML (used by AJAX).
i. A web **browser** (commonly referred to as a browser) is a software application for retrieving, presenting, and traversing information resources on the World Wide Web. An information resource is identified by a Uniform Resource Identifier (URI/URL) and may be a web page, image, video or other piece of content. Hyperlinks present in resources enable users easily to navigate their browsers to related resources.

## Claims

1. The system and method are based on the structuring/modeling of historical, cultural and artistic data and information according to the following logical entities: Content Provider, Appointees, Users, Cultural Site, Multimedia guides, itineraries, stages/points of interest, Media content, information sheets (FIG. 2).

2. A multimedia guide descriptor (MGD Multimedia File Descriptor) is a metadata file containing structured multimedia guide data and information. It is generated by the system and read by the software for the presentation of multimedia guide content on the user device (FIG. 1).

3. The system allows the use of cultural, historical and artistic data and information through texts, images, audio and video playbacks.

4. The system puts at content providers' disposal a unique method for transmitting data and information concerning physical and virtual places and cultural, historical and artistic sites.

5. The system puts at Users' disposal a method for improving their cultural, historical and artistic background concerning physical or virtual places or cultural, historical and artistic sites.

6. The method for the use of multimedia guide data and information of a multimedia guide is free from geographical, temporal and telecommunication constraints. No geographical constraints: It is possible to publish and use cultural data and information of all the heritage sites in the world. No temporal constraints: updated data and content are accessible as soon as they are published or republished. No telematic constraints : After the multimedia data and information downloading in the user cache, the multimedia guide can be used even without telecommunication connection.

7. The (AppGuide) application on the user mobile device of the user allows the following operations:
a. List and all the available media guides;
b. Request, Get and display multi-media content, and in particular:
i. View the general data of a multimedia guide , a itinerary, a stage/point of interest or a information sheet;
ii. List all the itineraries of a multimedia guide
iii. List all multimedia guide stages/points of interest;
iv. View the detailed data of all the information sheets of a stage/point of interest;
v. Display texts and images contained in all the information sheets of a stage/point of interest;
vi. Play the audio or a video for an information sheet.

8. The system consists of the following architectural components (FIG. 1):
• The component for data and cultural information management (CMS).
• The storage database and a structured data database.
• The component for the publication of cultural data and information (Publisher).
• The application for the presentation of multimedia content (AppGuide).
• The component for user authentication / authorization (AuthGuide).
• The component for the system data collection and analysis (Data Warehouse REF)
